# EUROPEAN PATENT APPLICATION

(11) **EP 3 150 267 A1**
(43) Date of publication of application: **05.04.2017**
(21) Application number: 14869486.2
(22) Date of filing: 27.11.2014
(51) Int. Cl.: B01D 33/06, B63B 13/00, C02F 1/32, C02F 1/46

(54) **PLEATED FILTER, AND BALLAST WATER TREATMENT DEVICE AND BALLAST WATER TREATMENT METHOD EACH USING SAME**

(30) Priority: 09.12.2013 JP 2013254004
(71) Applicant: Sumitomo Electric Industries, Ltd., Osaka-shi, Osaka 541-0041 (JP)
(72) Inventor: KANAZAWA, Shinichi, Osaka-shi Osaka 554-0024 (JP); YAHAGI, Satoshi, Osaka-shi Osaka 554-0024 (JP)
(74) Representative: Boult Wade Tennant
(86) International application number: PCT/JP2014/081301
(87) International publication number: WO 2015/087701

(57) **Abstract**

A pleated filter includes a filter base having folds that repeatedly form peak portions and valley portions and having a shape of a cylinder whose axial direction is a ridge line direction of the folds, and a reinforcing sheet disposed in a valley portion viewed from the inside of the shape of the cylinder. The reinforcing sheet includes a first reinforcing sheet located on a back side of a fold forming a projection toward the outer circumferential side of the shape of the cylinder and a second reinforcing sheet located in a spacing between adjacent folds forming projections toward the inner circumferential side of the shape of the cylinder. The first reinforcing sheet and the second reinforcing sheet are disposed apart from each other in a depth direction of pleats of the pleated filter.

## Description

### Technical Field

The present invention relates to a structure of a pleated filter that is mainly used for filtration of a liquid. In particular, the present invention relates to a pleated filter used in a treatment system of ballast water stored in ships and used for filtration of a large amount of water, and an apparatus using the same.

### Background Art

A wide variety of filters are used for the purpose of separating and removing a solid, which is a contaminant, from a gas or a liquid. Pleated filters whose filtration areas are increased by folding a filter so as to have a pleated shape are also used mainly in applications involving a gas, for example, in an air purification system. PTL 1 discloses an example of use of a cylindrically shaped pleated filter as a filter device for removing sludge from a cutting fluid of a machine tool. Regarding this device, it is described that a filter device having a high cleaning effect of a filter can be provided by ejecting a liquid toward an outer surface of a cylindrical filter while rotating the filter.

Meanwhile, treatment of ballast water carried in ships has become an issue in recent years. Ballast water is seawater carried in a ship to provide safe voyage even when the ship is empty of cargo. Various methods for removing, killing, or inactivating microbes by purifying ballast water have been developed. Methods using filtration for the purpose of removing relatively large microbes have also been developed. For example, PTL 2 describes a ballast water treatment apparatus using a filter membrane, the apparatus being filed by the applicant of the present invention.

### Citation List

### Patent Literature

PTL 1: Japanese Unexamined Patent Application Publication No. 2008-93783
PTL 2: Japanese Patent No. 4835785

### Summary of Invention

### Technical Problem

In the case of seawater desalination, the use of brackish water/seawater for purposes such as ballast water, or the treatment of water such as sewage water, human sewage, or industrial wastewater, a preliminary filtration treatment for removing foreign matter, contaminants, and microbes in the water is necessary. The inventors of the present invention have been examining the application of a pleated filter to such filtration. In this case, it is necessary to filter a large amount of water in the shortest possible time. However, in general, the operation at a large scale/high flow rate causes a technical problem in that a decrease in the amount of treatment or the filtration function due to clogging at an early stage tends to occur.

The apparatus disclosed in PTL 2 is a filtering device in which a cylindrical filter is installed in a tubular case and a liquid flowing from the outside to the inside of the cylindrical filter is collected as a filtrate. In the filtering device of PTL 2, a liquid to be filtered is ejected from a nozzle provided on a side face of the tubular case onto a part of a filtering surface of the filter, thereby cleaning filtered products deposited on a surface of the filter to recover the permeation flux, and the filtered products that have been washed out are discharged from a filtration front chamber. With this structure, a stable filtration state is continuously maintained. An important factor for stably maintaining continuous filtration of such a system is the cleaning effect obtained by ejecting, onto the filtering surface of the filter, the liquid to be filtered. In order to efficiently and effectively clean the entire filter by changing a cleaning region of the filter with time, the cylindrical filter is rotated during filtration by driving a motor or the like, thus continuously and periodically changing the position to which the ejection from the ejection nozzle is applied. In order to reliably perform this rotation cleaning and to stably maintain a high filtration flow rate, the ejection of the liquid to be filtered from the nozzle needs to be maintained at a certain high flow rate level or more. However, according to the studies conducted by the inventors, it was found that, as a result of being subjected to ejection at such a high flow rate, the cylindrical filter degrades with time and breaks, and part of the liquid to be filtered may be mixed directly with the filtrate without passing through the filter.

In view of this, an object of the present invention is to provide a pleated filter whose degradation and breakage due to use are prevented and which can be stably used for a long period of time, a ballast water treatment apparatus functioning as a filtering device using the pleated filter, and a ballast water treatment method using the pleated filter.

### Solution to Problem

As a result of intensive studies on degradation of a filter, the inventors of the present invention confirmed that breakage tends to occur in folded portions corresponding to peaks and valleys of pleats of a filter that has been subjected to ejection at a high flow rate, and arrived at the following structures.

Specifically, a pleated filter includes a filter base having folds that repeatedly form peak portions and valley portions and having a shape of a cylinder whose axial direction is a ridge line direction of the folds, and a reinforcing sheet disposed in a valley portion viewed from the inside of the shape of the cylinder. In the pleated filter, the reinforcing sheet includes a first reinforcing sheet located on a back side of a fold forming a projection toward the outer circumferential side of the shape of the cylinder and a second reinforcing sheet located in a spacing between adjacent folds forming projections toward the inner circumferential side of the shape of the cylinder. The first reinforcing sheet and the second reinforcing sheet are disposed apart from each other in a depth direction of pleats of the pleated filter.

The present invention provides a ballast water treatment apparatus including the above pleated filter as a filter membrane, an upper surface of the cylinder and a bottom surface of the cylinder of the pleated filter each being sealed in a watertight manner, the pleated filter being rotatably held about a cylindrical axis; an untreated-water nozzle that ejects untreated water toward an outer circumferential surface of the pleated filter; a case that includes an outer cylindrical portion provided so as to surround the pleated filter and including a nozzle opening of the untreated-water nozzle therein; a filtered-water flow path that leads filtered water having passed through the pleated filter from the inside of the cylinder of the pleated filter to the outside of the case; and a discharge flow path that discharges discharge water that is not filtered by the pleated filter to the outside of the case.

Furthermore, a method for treating ballast water includes installing the above ballast water treatment apparatus; using, as untreated water, seawater taken from the outside of the hull; further applying a sterilization treatment to filtered water treated by the ballast water treatment apparatus; and subsequently storing the resulting water in the hull as ballast water.

### Advantageous Effects of Invention

According to the above, it is possible to provide a pleated filter whose breakage due to use is prevented, thereby contributing to stable use for a long period of time, and a ballast water treatment apparatus and a ballast water treatment method using the pleated filter.

### Brief Description of Drawings

[Fig. 1] Figure 1 is a perspective schematic view illustrating a typical structural example of a pleated filter including a first reinforcing sheet and a second reinforcing sheet.
[Fig. 2] Figure 2 is an enlarged top schematic view illustrating a part of the pleated filter in Fig. 1.
[Fig. 3] Figure 3 is a partially enlarged schematic view of the pleated filter in Fig. 1, viewed from an inner circumferential side.
[Fig. 4] Figure 4 is an enlarged schematic view of a part of a pleated filter and illustrates the relationship with untreated water.
[Fig. 5A] Figure 5A is a view illustrating a part of a pleated filter viewed from a side face.
[Fig. 5B] Figure 5B is a view illustrating an example of a state in which breakage occurs in the pleated filter in Fig. 5A.
[Fig. 6] Figure 6 is an enlarged schematic view of a part of a section of a pleated filter including a first reinforcing sheet and a second reinforcing sheet, according to an embodiment of the present invention.
[Fig. 7] Figure 7 is an enlarged schematic view of a part of a section of a pleated filter including a reinforcing sheet, according to another embodiment.
[Fig. 8] Figure 8 is a view illustrating a state in which untreated water flows into a pleated filter and is a schematic view illustrating a state of a case where no reinforcing sheet is provided.
[Fig. 9] Figure 9 is a view illustrating a state in which untreated water flows into a pleated filter and is a schematic view illustrating a state of a case where one reinforcing sheet is provided.
[Fig. 10] Figure 10 is a view illustrating a state in which untreated water flows into a pleated filter having a spacing smaller than that in Fig. 9 and is a schematic view illustrating a state of a case where one reinforcing sheet is provided.
[Fig. 11] Figure 11 is a view illustrating a state in which untreated water flows into a pleated filter the same as that in Fig. 10 and is a schematic view illustrating a state of a case where two reinforcing sheets of a first reinforcing sheet and a second reinforcing sheet are provided.
[Fig. 12] Figure 12 is a perspective view illustrating the structure of a mesh sheet which is an example of a reinforcing sheet.
[Fig. 13] Figure 13 is a schematic view illustrating a structural example of a reinforcing sheet having connecting portions, according to an embodiment of the present invention.
[Fig. 14] Figure 14 is a schematic view illustrating another structural example of a reinforcing sheet having a connecting portion, according to an embodiment of the present invention.
[Fig. 15] Figure 15 is a schematic view illustrating another structural example of a reinforcing sheet having connecting portions, according to an embodiment of the present invention.
[Fig. 16A] Figure 16A is a view illustrating an example of a ballast water treatment apparatus according to an embodiment of the present invention and is a sectional schematic view illustrating the structure of a vertical section including an axis line.
[Fig. 16B] Figure 16B is a schematic view illustrating the structure of a horizontal A-A section in Fig. 16A.
[Fig. 17] Figure 17 is a block diagram illustrating an example of the overall structure of a ballast water treatment system using a ballast water treatment apparatus according to an embodiment of the present invention.

### Reference Signs List

- 2: reinforcing sheet
- 21, 112: first reinforcing sheet
- 22, 113: second reinforcing sheet
- 23: connecting portion
- 10, 101: pleated filter
- 11, 111: filter base
- 12, 13: fixing member
- 41: pump
- 42: filtering device
- 43: sterilization device
- 44: tank
- 31, 32, 33, 34, 35, 36: pipe
- 102: untreated-water nozzle
- 103: case
- 106: untreated-water flow path
- 107: filtered water flow path
- 108: discharge flow path
- 121: nozzle opening
- 131: outer cylindrical portion
- 132: lid portion
- 133: bottom portion
- 140: central pipe
- 141: water intake hole
- 190: motor
- 191: motor cover
- V: inner end
- M: outer end
- P: pressure
- D: substantially central portion of filter
- W: mass

### Description of Embodiments

### [Description of embodiments of present invention]

Embodiments of the present invention will now be listed and described. An embodiment of the present invention is a pleated filter including a filter base having folds that repeatedly form peak portions and valley portions and having a shape of a cylinder whose axial direction is a ridge line direction of the folds, and a reinforcing sheet disposed in a valley portion viewed from the inside of the shape of the cylinder. The reinforcing sheet includes a first reinforcing sheet located on a back side of a fold forming a projection toward the outer circumferential side of the shape of the cylinder and a second reinforcing sheet located in a spacing between adjacent folds forming projections toward the inner circumferential side of the shape of the cylinder. The first reinforcing sheet and the second reinforcing sheet are disposed apart from each other in a depth direction of pleats of the pleated filter. With this structure, breakage due to use is effectively prevented, and the pleated filter can be stably used for a long period of time.

The inventors of the present invention developed a pleated filter including a reinforcing sheet in a valley portion viewed from the inside of the shape of a cylinder and verified that an effect for preventing breakage was obtained. The inventors of the present invention found that when the spacing between pleats of a pleated filter is small, a space between pleats becomes extremely small because of the presence of the reinforcing sheet, and the volume of a feed that can be filtered may decrease. In view of this, the inventors of the present invention conceived the above structure, which is a structure suitable for ensuring a large filtering volume while effectively preventing breakage. The reinforcing sheet includes a first reinforcing sheet located on the back side of a fold forming a projection toward the outer circumferential side of the shape of the cylinder, and a second reinforcing sheet located in a spacing between adjacent folds forming a projection toward the inner circumferential side of the shape of the cylinder. The first reinforcing sheet and the second reinforcing sheet are disposed apart from each other in a depth direction of pleats of the pleated filter. This structure can effectively reinforce only a portion that is susceptible to breakage while keeping a sufficient space between pleats.

The cylindrical pleated filter is fixed by frame members provided so as to cover upper and lower openings thereof. The pleated filter has this structure in order that the frame members hermetically seal the upper and lower openings while maintaining the pleated shape and the cylindrical shape. Each of the first reinforcing sheet and the second reinforcing sheet is fixed to the frame members together with a filter base of the pleated filter. To achieve a function of preventing breakage, the first reinforcing sheet and the second reinforcing sheet may be separately provided, and each of the reinforcing sheets may be fixed to the frame members. Furthermore, considering the ease of assembly of the pleated filter, in particular, positioning and an accurate arrangement of the reinforcing sheets, the first reinforcing sheet and the second reinforcing sheet are preferably an integrally formed body including a connecting portion.

The shape and the arrangement of the connecting portion are not particularly limited. However, the pleated filter of the present invention preferably has a structure in which a separation and a space are ensured between the first reinforcing sheet and the second reinforcing sheet. For example, the pleated filter of the present invention preferably has a structure in which the two reinforcing sheets are connected to each other with a rod-like or plate-like connecting member therebetween. In the simplest structure, a single connecting member may be provided between end portions or central portions of the two reinforcing sheets. Alternatively, the two reinforcing sheets may be connected to each other with a plurality of connecting members therebetween. In this case, the resulting structure becomes strong and thus is convenient for assembly etc. A particularly preferable embodiment is a rectangular frame member. Specifically, the reinforcing sheet is preferably an integrally formed body that includes the first reinforcing sheet, the second reinforcing sheet, and connecting portions disposed on upper ends and lower ends of the reinforcing sheets, and the integrally formed body preferably has a rectangular shape as a whole. This shape is preferable from the standpoint that a large space in a central portion can be ensured, and the two reinforcing sheets are strongly connected to each other. The simplest embodiment of this shape is a rectangular frame member that is integrally formed as a whole by the first reinforcing sheet, the second reinforcing sheet, and upper and lower connecting portions, the rectangular frame member being a rectangular sheet member formed of a single plate having an opening in a central portion thereof. This embodiment is preferable from the viewpoint of, for example, a reduction in the cost because of the ease of production and handling.

One or both of the reinforcing sheets are preferably formed by using a flat sheet base having a large number of holes penetrating from a front surface to a back surface, that is, a porous sheet material. In particular, it is simple and easy to use a mesh-like sheet material as the porous sheet material. The reinforcing sheet is a member having a strength high enough to prevent a bending deformation of the filter. In addition, it is necessary to take a consideration that expansion of the pleats of the filter due to a pressure of untreated water is not excessively disturbed. Furthermore, it is preferable to consider improvement of the flow of the filtrate and a reduction in the weight of the entire filter. The simplest structure is a rectangular sheet member having a shape obtained by removing a central portion of a mesh-like sheet material. This structure is easily obtained by integral formation, and the reinforcement at a low cost can be easily realized.

A size of a hole of about 0.5 to 8 mm (a pitch of 1 to 10 mm in a case of a mesh) is preferably used from the viewpoint of the balance between permeation of the filtrate and strength of the sheet. More preferably, the size of a hole is 3 to 5 mm (the pitch is 3 to 5 mm in a case of a mesh). The thickness of the sheet is selected in consideration of the pitch of pleats (spacing between adjacent valley portions) and a desired strength. The thickness of the sheet used is preferably 0.3 to 2 mm and more preferably 0.5 to 1,5 mm.

These reinforcing sheets are preferably formed of a resin selected from the group consisting of polypropylene, polyethylene (in particular, medium to low-density polyethylene in terms of restoring force), polyamide resins such as nylon, polyester resins such as polyethylene terephthalate, and vinyl chloride. From the viewpoint of the ease of handling during production, a reduction in the weight, the cost, etc., resin members having required strength are preferably used. Polypropylene is particularly preferable from the viewpoint of having appropriate strength and restoring force. Some metallic materials and nonmetallic materials such as glass-ceramics have a performance superior to that of resins in terms of strength. However, in the present embodiment, a restoring force for deformation is also required for the reinforcing sheets. Therefore, in the case of a metal, it is necessary to use a spring material or to perform a quenching treatment. However, comprehensively considering a processing for forming a mesh-like structure and corrosiveness for seawater, the resin materials mentioned above are suitable.

The present invention also discloses a ballast water treatment apparatus using the above pleated filter as a filter membrane. Specifically, a ballast water treatment apparatus includes the cylindrical pleated filter as a filter membrane, an upper surface of the cylinder and a bottom surface of the cylinder of the pleated filter each being sealed in a watertight manner, the pleated filter being rotatably held about a cylindrical axis; an untreated-water nozzle that ejects untreated water toward an outer circumferential surface of the pleated filter; a case that includes an outer cylindrical portion provided so as to surround the pleated filter and including a nozzle opening of the untreated-water nozzle therein; a filtered-water flow path that leads filtered water having passed through the pleated filter from the inside of the cylinder of the pleated filter to the outside of the case; and a discharge flow path that discharges discharge water that is not filtered by the pleated filter to the outside of the case.

In the apparatus having this structure, untreated water is ejected from the nozzle opening outside the cylinder of the cylindrical pleated filter toward an outer surface of the pleated filter, and thus the pressure of the untreated water concentrates on a part of pleats. Consequently, the pressure is applied in directions in which the pleats open, and the filter is more likely to break in valley portions and peak portions as described above. In view of this, by employing the above-described breakage-preventing structure with the reinforcing sheets, it is possible to expect the advantages such as the suppression of the occurrence of filtration failure, a long-term operation of the apparatus due to extension of the lifetime of the pleated filter, and a reduction in the operation cost.

A method in which the above pleated filter is used in filtration may be a method for treating ballast water, the method including installing the ballast water treatment apparatus in a hull; using, as untreated water, seawater taken from the outside of the hull; further applying a sterilization treatment to filtered water treated by the ballast water treatment apparatus; and subsequently storing the resulting water in the hull as ballast water.

By using the apparatus or using the method, breakage of a filter is suppressed as compared with existing techniques, and the filter can be stably used for a long period of time without causing filtration failure. Consequently, the labor cost of maintenance and the cost of materials to be exchanged can be reduced, and the production of ballast water can be further facilitated.

### [Details of embodiments of present invention]

The structures of a pleated filter and a ballast water treatment apparatus according to embodiments of the present invention will now be described with reference to the drawings. The scope of the present invention is not limited to these embodiments but is defined by the claims described below. It is intended that the scope of the present invention includes equivalents of the claims and all modifications within the scope of the claims.

### (Structure of pleated filter)

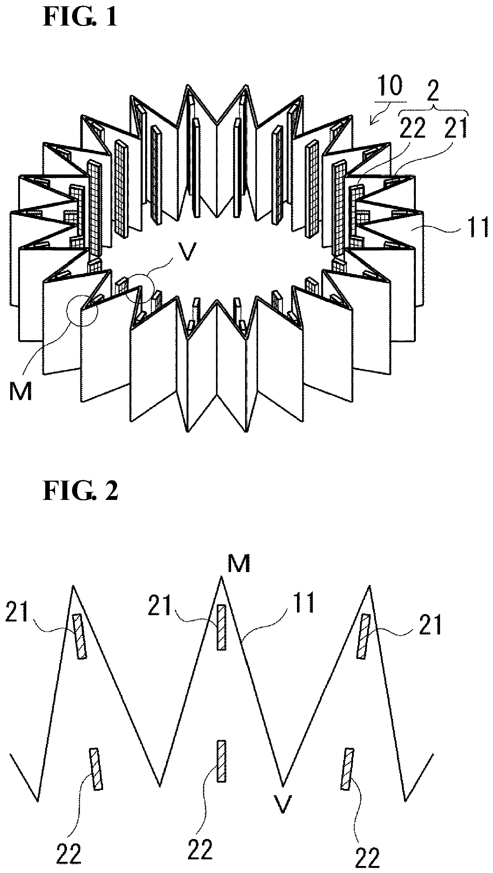

Figure 1 schematically illustrates a typical example of the structure of a pleated filter of the present embodiment. A pleated filter 10 in Fig. 1 is obtained by forming a pleated shape by repeatedly folding a sheet-like filter base 11 so as to have alternating peaks and valleys, and further connecting both ends thereof to have a cylindrical shape as a whole. In the case of practical use, an upper surface and a lower surface of the cylinder are sealed with other members, and the shape is fixed by the other members. Filtration is performed from the outside of the cylindrical filter to the inside thereof. In the description below of the present invention, a portion V in the figure, the portion being a fold projecting toward the inside of the cylinder, is referred to as a "projection toward the inner circumferential side" or "inner end", and a portion M in the figure, the portion being a fold projecting toward the outside of the cylinder, is referred to as a "projection toward the outer circumferential side" or "outer end". A valley portion viewed from the inside of the cylinder is a space disposed between portions V and on the back side of a portion M. It is to be noted that Fig. 1 illustrates a pleated shape schematically, and actual folds do not have ideal acute angles as illustrated in the figure. In addition, in order to increase the filtration area, practically, the folds are often formed dense enough so that adjacent surfaces of the base come in contact with each other. These points will be described later.

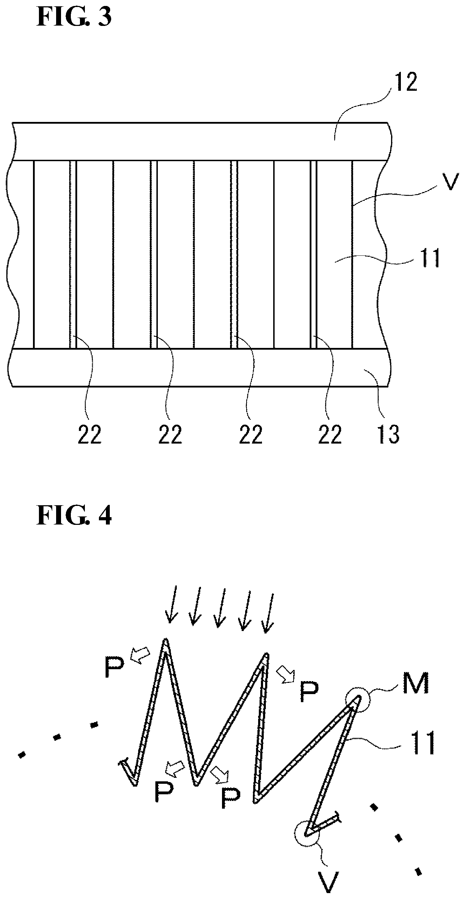

As illustrated in Fig. 1, the pleated filter includes a reinforcing sheet 2 that is divided into two reinforcing sheets having functions. A reinforcing sheet arranged on the back side of the outer end is referred to as a "first reinforcing sheet 21". A reinforcing sheet arranged in a space between adjacent inner ends is referred to as a "second reinforcing sheet 22". Preferably, as illustrated in Fig. 1, the pleated filter includes reinforcing sheets in all valley portions. Figure 2 is a schematic view of a section of a part of the pleated filter in Fig. 1, viewed from the upper surface side. The first reinforcing sheet 21 and the second reinforcing sheet 22 are disposed apart from each other in a depth direction of pleats of the pleated filter. Similarly, Fig. 3 is a schematic view of a part of the pleated filter in Fig. 1, viewed from the inner circumferential side of the cylinder. However, in addition to Fig. 1, Fig. 3 further illustrates the arrangement of fixing members (frames serving as lids) 12 and 13. In this manner, each of the second reinforcing sheets 22 is arranged between the inner ends (portions V) and is fixed together with the filter base 11 by the upper fixing member 12 and the lower fixing member 13. The fixing members 12 and 13 are disc-shaped or ring-shaped members which are arranged on and under the cylinder, and, while fixing the shapes of the filter base 11 and the reinforcing sheets 2, which maintains water-tightness of the fixed portions. Preferably, the fixing members 12 and 13 are fixed to the upper ends and the lower ends of the filter base 11 and the reinforcing sheets 2 with a resin functioning as an adhesive and a sealant therebetween.

A porous resin sheet is used as the base of the filter. Examples of the base that can be used include porous structures such as a stretched porous body, a porous body by phase separation, and a non-woven cloth that are formed of a material such as polyester, nylon, polyethylene, polypropylene, polyurethane, polytetrafluoroethylene (PTFE), or polyvinylidene fluoride (PVdF). For the purpose of a treatment at a high flow rate, a non-woven cloth formed of a polyester such as polyethylene terephthalate is particularly suitably used.

A structure is assumed in which a liquid to be filtered is supplied from the outer circumferential side of the cylinder of the pleated filter 10 having the shape illustrated in Fig. 1 and is filtered to the inside of the cylinder. Figure 4 is a view illustrating the force applied to the filter base 11 in such a case. The reinforcing sheets are not illustrated. In Fig. 4, the five aligned arrows indicate a direction in which the untreated liquid is supplied from the outer end M side. Pressure P is applied to the filter base 11 in a direction in which pleats open. Furthermore, the pressure P applied is changed by variations in the flow rate and the pressure of the untreated liquid and acts on the filter base 11 as vibrations and repetitive bending depending on the structure.

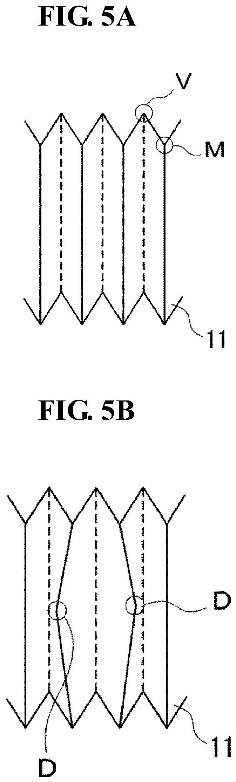

Figures 5A and 5B illustrate an example of damage caused in a pleated filter due to the pressure P described above. Figure 5A schematically illustrates a state before the damage occurs. Figure 5B schematically illustrates a state when the damage occurs. The top and the bottom of the filter are fixed in order to fix the shape and to achieve sealing. Accordingly, when the pressure is repeatedly applied in the direction in which the outer ends open as illustrated in Fig. 4, substantially central portions D of the filter are bent in the directions illustrated in Fig. 5B. As a result, cracking and breaking may occur in the substantially central portions D of the filter base 11, and the filtration function may be impaired. In particular, when the liquid to be filtered is a liquid such as water, the filter receives a higher pressure than that in the case of a gas such as air, and thus the filter is easily broken in the folded portions.

Opening (bending) of central portions of the filter in the directions illustrated in Fig. 5B is advantageous in that the untreated liquid is supplied to the inner part of the pleats, and the surface of the filter is easily cleaned by the flow of the liquid. However, breakage and the like caused by the bending must be prevented. In view of this, the filter base is reinforced by providing a reinforcing sheet in a valley portion viewed from the inside of the cylindrical shape, and thus the bending can be suppressed. The reinforcing sheet is a member having a strength that prevents bending deformation of the filter. Furthermore, preferably, the reinforcing sheet does not excessively prevent pleats of the filter from expanding by the pressure of untreated water. Specifically, while the reinforcing sheet prevents the filter from bending at an obtuse angle (to form a "dogleg" shape) as illustrated in Fig. 5B, the reinforcing sheet is preferably bent into a gentle curve and preferably has a restoring force for returning to the original shape when released from the pressure by the untreated water.

Such a breakage of the filter base also occurs in the inner ends of the filter. Although significant improvement is achieved by providing the reinforcing sheets, further improvement is desired. The inventors of the present invention focused on the fact that the movement of the filter significantly relates to the breakage. The inventors of the present invention further focused their attention on, as means for restricting the movement, the shape of the folds of the filter and arrived at a concept of arranging pleats densely. Specifically, it is expected that the effect of suppressing deformation can be achieved by making the inner circumferential side of the cylinder of pleats be as dense as possible.

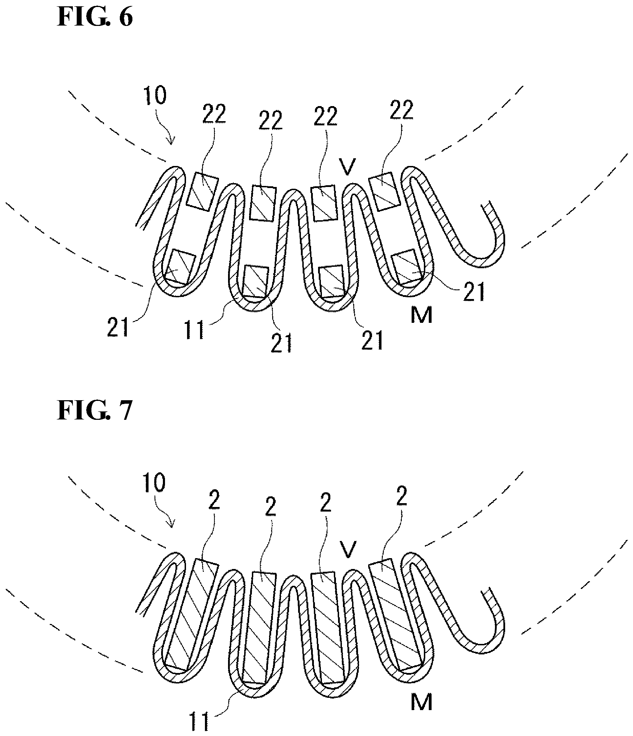

In the drawings used in the above description, for the sake of explanation, the filter shape is drawn in a state where a filter base is folded at an ideal acute angle. Regarding a practical shape of the pleated filter, it is difficult to ideally fold a base at an acute angle. Figure 6 is an enlarged schematic view of a part of a section of a pleated filter, in which the pleated filter is illustrated in an exaggerated manner for the purpose of explaining the actual state so as to be easily understood. In both the inner end V and the outer end M of a filter base 11, the filter base 11 has folds each of which does not have an acute angle with a bend radius of about zero but has a rounded shape. Accordingly, a planar portion serving as a filtration surface of the filter does not necessarily form a straight line. A first reinforcing sheet 21 and a second reinforcing sheet 22 are arranged in a spacing between pleats that are folded densely. Figure 7 is a view illustrating a case where one reinforcing sheet is arranged in each spacing between pleats for comparison. A reinforcing sheet 2 is arranged in each valley portion of pleats of a filter base 11.

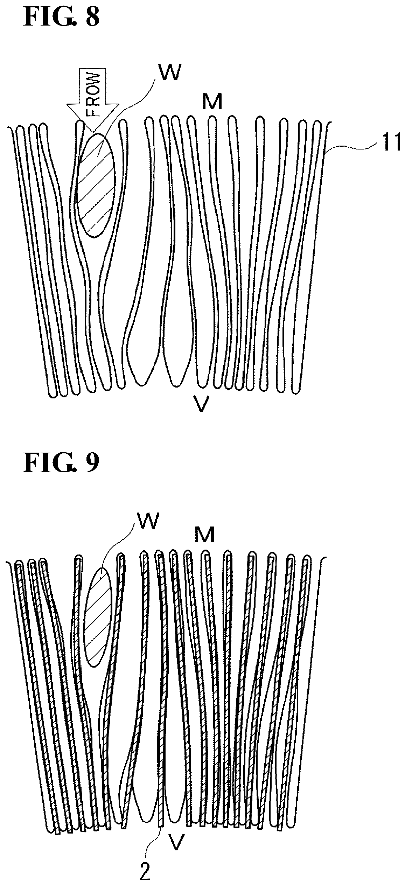

The operation when the reinforcing sheet includes a first reinforcing sheet and a second reinforcing sheet will be described with reference to Figs. 8 to 11. Figures 8 to 11 are each an enlarged view of a part of a horizontal section of a cylindrical pleated filter obtained by folding a filter base 11. Figures 8 to 11 simulate a state in which untreated water flows into a portion of a pleat while sequentially shifting the position thereof. The untreated water flows from an external nozzle as a mass W in the direction shown by the arrow in the figure, expands pleats so as to open the pleats, and enters between the pleats.

Figure 8 is a view illustrating a state in which untreated water flows into a pleated filter that does not have a reinforcing sheet. The length between a peak and a valley (pleat depth) of pleats is 70 mm, and the spacing between pleats on the inner circumferential side is 2.8 mm. At this time, the pleats are significantly expanded on the outer circumferential side. As a result of the repetition of a movement of expansion and contraction, folds become easily damaged. Furthermore, folds of the pleats expand also on the inner circumferential side. As a result of this repetition, the inner circumferential side also becomes easily damaged.

Figure 9 illustrates an example of a case where a single reinforcing sheet 2 extending over the entire valley depth is provided in each valley of pleats. The length between a peak and a valley (pleat depth) of pleats is 70 mm, the spacing between pleats on the inner circumferential side is 4.0 mm, and the thickness of the reinforcing sheet is 1.7 mm. By providing the reinforcing sheet in this manner, deformation of the pleats is reduced. In particular, the bending illustrated in Fig. 5(B) is suppressed, and damage does not readily occur. However, even in this structure, the change in the spacing between pleats is still significant, and the outer circumferential side and the inner circumferential side become easily damaged due to the repetition.

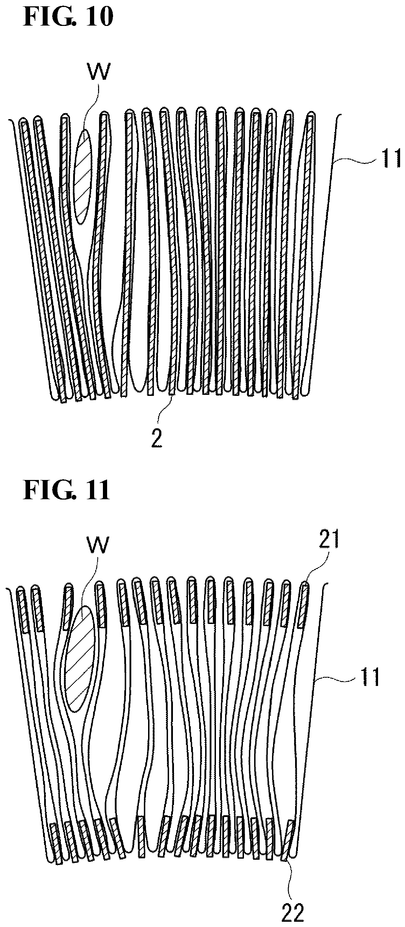

A pleated filter in Fig. 10 has a similar structure to that in Fig. 9. However, the spacing between pleats on the inner circumferential side is 3.3 mm, and the thickness of the reinforcing sheet is 1.7 mm. The pleated filter in Fig. 10 differs from the pleated filter in Fig. 9 in that the pleats are arranged very densely on the inner circumferential side. With this structure, the change in the spacing between pleats on the inner circumferential side is significantly reduced. Consequently, in particular, the inner circumferential side is not readily damaged. However, with this structure, not only can the pleats be arranged densely on the inner circumferential side, but also all the spacing between the pleats becomes small due to the presence of the reinforcing sheets. Specifically, in the spacing between pleats, a space in which untreated water can be present becomes extremely small, resulting in a decrease in the filtration volume. Furthermore, it was found that the effect of cleaning a surface of the filter base due to passage of untreated water is not readily obtained, and clogging of the filter tends to occur.

Figure 11 illustrates an embodiment of the present invention and illustrates an example in which the reinforcing sheet is constituted by a first reinforcing sheet 21 and a second reinforcing sheet 22. The reinforcing sheets each have a thickness of 1.7 mm and a width of 20 mm. The first reinforcing sheet 21 on the back side of an outer circumferential portion reinforces the outer circumferential side. The inner circumferential side is densely formed by the second reinforcing sheet 22 on the inner circumferential side. Accordingly, the change in the spacing between pleats is suppressed to suppress breakage. Furthermore, in the spacing between pleats, a large space in which the reinforcing sheet is not present can be ensured. Thus, a decrease in the filtration volume can be suppressed, and a decrease in the cleaning effect can also be prevented. Therefore, a long-term filtering operation can be continued without clogging and without causing damage.

### (Reinforcing sheet)

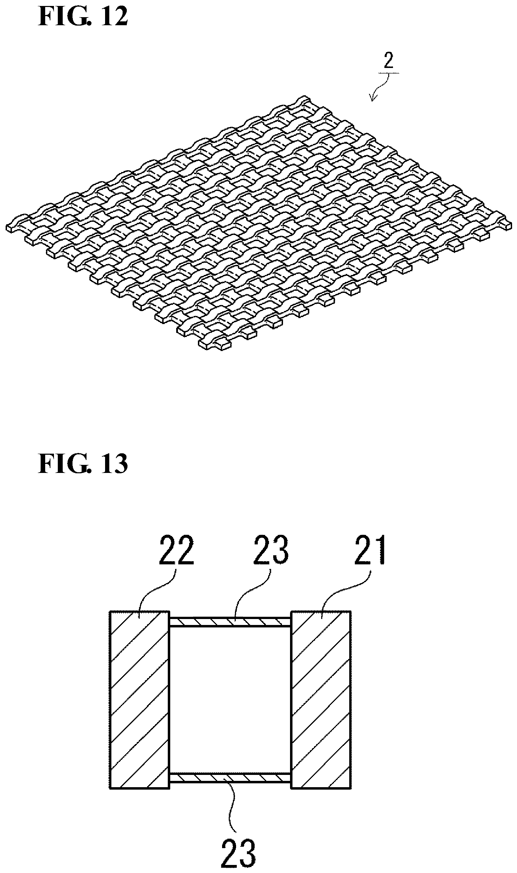

Figure 12 illustrates a mesh sheet which is used as a typical example of the reinforcing sheet 2 (or the first reinforcing sheet 21 and the second reinforcing sheet 22). Figure 12 illustrates an example of a mesh sheet formed of a resin. Even when the reinforcing sheet is formed of a simple sheet material, the reinforcing effect is obtained. However, the reinforcing sheet preferably has a large number of holes penetrating from a surface of a sheet member to another surface thereof. This is because such a sheet member having a large number of holes does not easily block a flow of a filtrate. Furthermore, as illustrated in the mesh sheet having irregularities in Fig. 12, when the reinforcing sheet has irregularities on surfaces thereof in addition to a large number of holes, close contact between the reinforcing sheet and the filter base can also be prevented. Examples of a porous sheet that can be used include not only a mesh-like sheet but also a punched material obtained by forming a large number of holes in a sheet, and a sheet having continuous pores with a three-dimensional mesh-like structure.

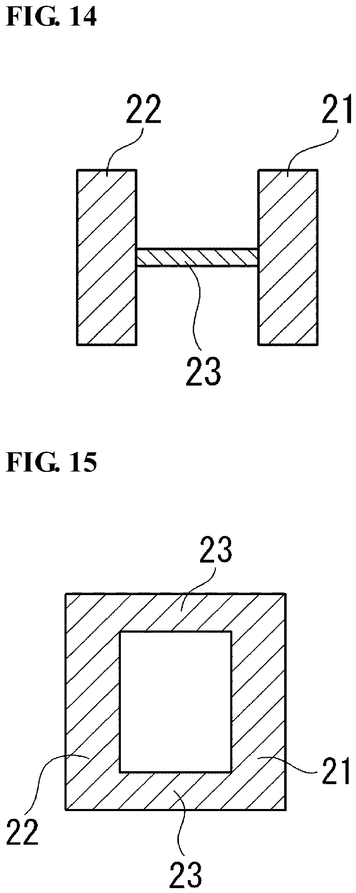

Figures 13 to 15 illustrate examples of the structures in which a first reinforcing sheet 21 and a second reinforcing sheet 22 are connected by a connecting portion 23 and are each a schematic plan view illustrating the front of a reinforcing sheet. The shape and the arrangement of the connecting portion are not particularly limited. However, the reinforcing sheet preferably has a structure in which a separation and a space are ensured between the first reinforcing sheet and the second reinforcing sheet. Figures 13 and 14 illustrate structural examples in which two reinforcing sheets are connected to each other with a rod-like connecting member therebetween. Figure 13 illustrates an example in which a connecting portion 23 is provided on each of an upper end and a lower end of a first reinforcing sheet 21 and a second reinforcing sheet 22, that is, two connecting portions 23 are provided in total. Figure 14 illustrates an example in which a single connecting portion 23 is arranged near the center of reinforcing sheets. As described above, the number and the arrangement of the connecting portions 23 are not limited as long as the connecting portions 23 have a function of fixing the arrangement of two reinforcing sheets, and a sufficient space is provided between the reinforcing sheets. Figure 15 illustrates a rectangular frame member as an example in which reinforcing sheets provided with connecting portions can be easily obtained. The first reinforcing sheet 21, the second reinforcing sheet 22, and the connecting portions 23 can be integrally formed by removing a rectangular portion from the center of a sheet-like material or by conducting molding using a frame-shaped molding frame.

### (Filtering device)

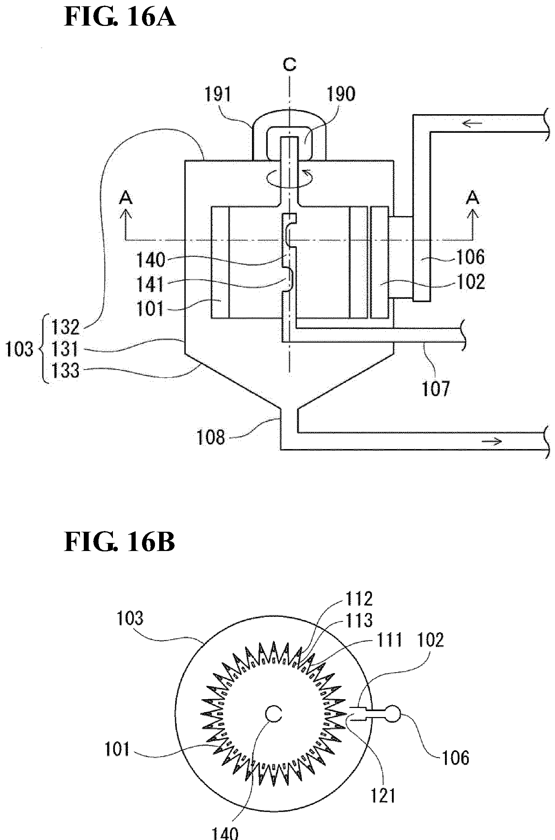

As a preferred application example of a filtering device using the pleated filter described above, a structure of a ballast water treatment apparatus will be described with reference to drawings. Figures 16A and 16B are views illustrating an example of an apparatus for treating ballast water for ships, according to an embodiment of the present invention. Figure 16A is a schematic view illustrating the structure of a vertical section including an axis line. Figure 16B is a schematic view illustrating the structure of a horizontal A-A section in Fig. 16A. A cylindrical pleated filter 101 is disposed about an axis line, which is the center of rotation, and is mounted to be rotatable about a central pipe 140 arranged in the center (the pipe does not rotate). Upper and lower surfaces of the pleated filter are sealed in a watertight manner. The rotatable attachment structure also needs to have a watertight structure. However, the attachment structure is not particularly limited, and a known structure may be used. A case 103 is provided so as to cover the whole filter. The case 103 includes an outer cylindrical portion 131, a lid portion 132, and a bottom portion 133. A discharge flow path 108 is provided on the bottom portion 133. An untreated-water flow path 106 and an untreated-water nozzle 102 are provided in order to introduce seawater as untreated water into the case 103. The untreated-water nozzle 102 is provided to extend from the untreated-water flow path 106 so as to have a nozzle opening 121 thereof in the outer cylindrical portion 131 of the case 103, and is configured so that untreated water flows toward an outer circumferential surface of the pleated filter. A motor 190 is provided on the central axis of the pleated filter for the purpose of the rotation of the pleated filter. The motor 190 is housed in a motor cover 191 and is driven by an electric power supplied from a driving control unit (not shown).

In this embodiment, the untreated water ejected from the untreated-water nozzle is applied to the outer circumferential surface of pleats of the pleated filter, and an effect of cleaning the pleated filter is obtained by the pressure of the untreated water. The untreated water that is not filtered and suspensoid settled in the case are sequentially discharged from the discharge flow path on the bottom portion of the case. This point that filtration is performed while continuously and constantly discharging suspensoid and residual untreated water in this manner is also a feature of this apparatus. This feature is advantageous for reliably achieving an amount of treatment of 10 to 20 ton/hour and more than 100 ton/hour, which are required for ballast water. Although valves and the like are not illustrated in the discharge flow path in the figure, devices necessary for maintenance and flow rate control are provided. The filtered water filtered by the pleated filter 101 is guided to a filtered water flow path 107 through a water intake hole 141 provided in the central pipe 140 in the filter, and is discharged to the outside of the case.

The nozzle opening 121 of the untreated-water nozzle 102 may have a rectangular opening. A large amount of water is ejected from the untreated-water nozzle onto the pleated filter surface, thereby generating vibrations in directions in which folds of the pleated filter open and close. As a result, a hole such as splitting is easily formed in the folds. In this embodiment, a case of a pleated filter provided with a reinforcing sheet is described as an example. Accordingly, breakage can be effectively suppressed, and a long-term stable operation of the apparatus can be more reliably realized. In this embodiment, the pleated filter 101 includes a filter base 111, a first reinforcing sheet 112, and a second reinforcing sheet 113.

### (System for treating ballast water for ships)

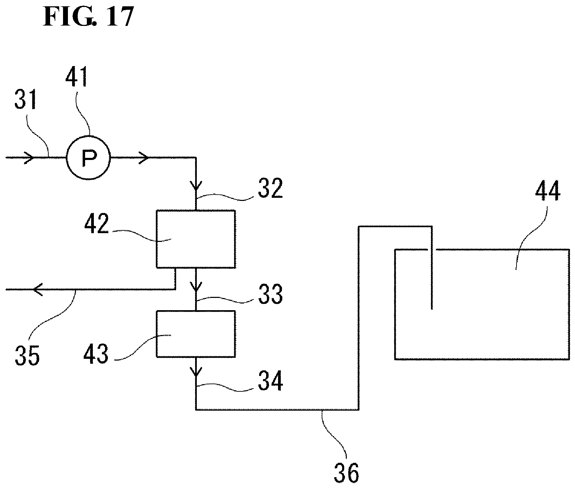

Figure 17 is an explanatory diagram that schematically illustrates the overall structure of a system for treating ballast water for ships, in which the ballast water treatment apparatus described above is used as a filtering device. In Fig. 17, untreated water, which is seawater taken from the ocean, is fed through a pipe 31 with a pump 41 and is supplied to a filtering device 42, which is filtering means, through a pipe 32. Filtered water filtered in the filtering device 42 passes through a pipe 33 and is fed to a sterilization device 43 (which is not essential) such as an ultraviolet irradiation device or an electrolytic device. Discharge water that has not been filtered in the filtering device 42 is led to the outside of the device through a pipe 35. The seawater that has been subjected to a sterilization treatment is fed to a tank 44 through pipes 34 and 36.

### (EXPERIMENTAL EXAMPLE 1)

In order to confirm the effect obtained by a reinforcing sheet, filtration of seawater was performed using the ballast water treatment apparatus illustrated in Figs. 16A and 16B. Regarding the dimensions of the apparatus, which performs a treatment at 100 ton/hour, a pleated filter has an outer diameter of 700 mm, an effective length in the axial direction of 200 mm, a pleat depth of 70 mm, and the number of pleats of 460.

### Materials used are as follows.

Filter base: Polyethylene terephthalate non-woven cloth (trade name: AXTAR G2260-1S BK0, manufactured by Toray Industries, Inc.)
First reinforcing sheet and second reinforcing sheet:
200 mm in effective length × 10 mm in width
Polypropylene mesh sheet (trade name: TRICAL NET SN-598, manufactured by Takiron Co., Ltd.)

| | |
|---|---|
| Mesh pitch | 4.8 mm × 4.8 mm |
| Nominal thickness | 1.5 mm (warp 1.5 mm, weft 1.2 mm) |

Spacing between first reinforcing sheet and second reinforcing sheet: 50 mm

Standard seawater (salt concentration: 2% to 4%, turbidity: 1 to 1,000 NTU (nephelometric turbidity units)) taken in Imari city in Saga prefecture was used as seawater which was untreated water. An initial differential pressure of the filtering operation was about 5 kPa, and the rotational speed of the filter was 95 rpm. The difference in pressure between the inside and the outside of the filter was constantly measured. The time at which the differential pressure increased by 2 kPa from the start of the filtering operation was considered as the occurrence of clogging. The cumulative operating time until the occurrence of clogging was measured. Furthermore, L-sized plankton contained in the filtered seawater was monitored. The time at which plankton leakage was detected was considered as filter damage. The cumulative operating time until the damage was measured. In this Experimental Example, after 70 hours passed, clogging of the pleated filter did not occur, and damage of the pleated filter also did not occur.

### (EXPERIMENTAL EXAMPLE 2)

An experiment was conducted using the same ballast water treatment apparatus and under the same conditions as those in Experimental Example 1 except that, as a reinforcing sheet, a single reinforcing sheet was used in each spacing between pleats. The reinforcing sheet is a single reinforcing sheet having a size of the first reinforcing sheet and the second reinforcing sheet that are continuously connected to each other, and has an effective length of 200 mm and a width of 70 mm. The material of the reinforcing sheet is the same as that in Experimental Example 1 except for the size. An experiment was conducted using the same apparatus and under the same conditions as those in Experimental Example 1. As a result, clogging of the pleated filter was observed after 20 hours. After 70 hours passed, damage of the pleated filter did not occur.

### (EXPERIMENTAL EXAMPLE 3)

An experiment was conducted using the same ballast water treatment apparatus and under the same conditions as those in Experimental Example 1 except that no reinforcing sheet was used. After 70 hours passed, clogging of the pleated filter did not occur. However, after 50 hours passed, damage of the pleated filter was observed.

### Industrial Applicability

According to the pleated filter of the present invention, a decrease in the performance due to breakage does not occur, and the pleated filter has good durability. Accordingly, the pleated filter of the present invention can be suitable for use in preliminary filtration treatment for removing foreign matter, contaminants, and microbes in water in the cases of seawater desalination, the use of brackish water/seawater for purposes such as ballast water, or the treatment of water such as sewage water, human sewage, industrial waste water, or the like. Furthermore, the pleated filter is suitable for the treatment of water having a high suspensoid/high SS content and a concentration treatment, and thus can also be used in the field of collection of valuable recyclable materials, for example, in the field of food.

## Claims

1. A pleated filter comprising a filter base having folds that repeatedly form peak portions and valley portions and having a shape of a cylinder whose axial direction is a ridge line direction of the folds; and a reinforcing sheet disposed in a valley portion viewed from the inside of the shape of the cylinder,
wherein the reinforcing sheet includes a first reinforcing sheet located on a back side of a fold forming a projection toward the outer circumferential side of the shape of the cylinder and a second reinforcing sheet located in a spacing between adjacent folds forming projections toward the inner circumferential side of the shape of the cylinder, and the first reinforcing sheet and the second reinforcing sheet are disposed apart from each other in a depth direction of pleats of the pleated filter.

2. The pleated filter according to Claim 1, wherein the first reinforcing sheet and the second reinforcing sheet form an integrally formed body including a connecting portion.

3. The pleated filter according to Claim 1 or 2, wherein the first reinforcing sheet and the second reinforcing sheet form an integrally formed body including connecting portions on upper ends and lower ends of the reinforcing sheets, the integrally formed body being a rectangular frame member as a whole.

4. The pleated filter according to any one of Claims 1 to 3, wherein at least one of the first reinforcing sheet and the second reinforcing sheet is formed of a flat sheet base having a large number of holes penetrating from a front surface to a back surface.

5. The pleated filter according to any one of Claims 1 to 4, wherein the first reinforcing sheet and the second reinforcing sheet are formed of a resin selected from the group consisting of polypropylene, polyethylene, polyamide, polyester, and vinyl chloride.

6. A ballast water treatment apparatus comprising the cylindrical pleated filter according to any one of Claims 1 to 5, the pleated filter serving as a filter membrane,
an upper surface of the cylinder and a bottom surface of the cylinder of the pleated filter each being sealed in a watertight manner, the pleated filter being rotatably held about a cylindrical axis;
an untreated-water nozzle that ejects untreated water toward an outer circumferential surface of the pleated filter;
a case that includes an outer cylindrical portion provided so as to surround the pleated filter and including a nozzle opening of the untreated-water nozzle therein;
a filtered-water flow path that leads filtered water having passed through the pleated filter from the inside of the cylinder of the pleated filter to the outside of the case; and
a discharge flow path that discharges discharge water that is not filtered by the pleated filter to the outside of the case.

7. A method for treating ballast water, the method comprising installing the ballast water treatment apparatus according to Claim 6 in a hull; using, as untreated water, seawater taken from the outside of the hull; further applying a sterilization treatment to filtered water treated by the ballast water treatment apparatus; and subsequently storing the resulting water in the hull as ballast water.
